# EUROPEAN PATENT SPECIFICATION

(11) **EP 3 825 107 B1**
(45) Date of publication and mention of the grant of the patent: **06.07.2022**
(21) Application number: 19211078.1
(22) Date of filing: 24.11.2019
(51) Int. Cl.: B29C 70/86, B60B 21/04, B60B 21/02, B60B 5/02, B29C 53/82, B29C 70/54, B29C 70/48, B29L 31/32, B60B 21/06

(54) **COMPOSITE WHEEL RIM AND METHOD TO MANUFACTURE COMPOSITE WHEEL RIM**
VERBUNDRADFELGE UND VERFAHREN ZUR HERSTELLUNG EINER VERBUNDRADFELGE
JANTE DE ROUE COMPOSITE ET PROCÉDÉ DE FABRICATION DE JANTE DE ROUE COMPOSITE

(43) Date of publication of application: 26.05.2021
(73) Proprietor: Pantech Innovation Ltd, Co., Taichung City 437 (TW)
(72) Inventor: LEE, Shih-peng, 437 TAICHUNG CITY (TW); Yang, Tsung-Che, 437 TAICHUNG CITY (TW)
(74) Representative: Lang, Christian

(56) References cited:
- EP-A1- 3 231 631
- CN-A- 102 198 777
- DE-A1- 4 425 592

## Description

### BACKGROUND OF THE INVENTION

### Field of the Invention

The present invention relates to a composite wheel rim and a method to manufacture composite wheel rim.

### Description of the Prior Art

A conventional composite wheel rim is manufactured by winding carbon fiber sheets on a core, or stacking carbon fiber sheets on the core. Thereafter, the carbon fiber sheets and the core are placed into a mold for heating and shaping. The carbon fiber sheets are usually resin prepregs.

However, the surface of the wheel rim is rough and has a plurality of slits because the overlapping carbon fiber sheets. In addition, the gap between adjacent carbon fiber sheets is much larger so that the thickness of the wheel rim is difficult to reduce.

Besides, the wheel rim formed by winding carbon fiber sheets has a weak structure strength to be unable to meet the requirements of racing.

Document CN 102 198 777 A teaches a conventional method for making a compound wheel ring with a tyre slot, wherein said compound wheel ring has a circular inner frame and a circular outer frame, wherein the tyre slot is formed around the outer frame, and wherein the tyre slot has an outward opening.

Document DE 44 25 592 A1 teaches a wheel body suitable for a bicycle rim, which has a pre-formed core being spirally-wound with a prepreg band, which consists of fibre-reinforced plastic resin.

Document EP 3 231 631 A1, corresponding to the preamble of the independent claims, discloses a conventional composite wheel rim, comprising an outer ring, an inner ring and a covering portion, wherein the outer ring comprises at least one first winding layer formed by composite material fibers, wherein the inner ring comprises at least one second braiding layer formed by composite material fibers, and wherein the covering portion also comprises at least one third braiding layer formed by composite material fibers.

### SUMMARY OF THE INVENTION

The main object of the present invention is to provide a composite wheel rim having improved structure strength and stiffness.

To achieve the above and other objects, a composite wheel rim of the present invention includes a main body. The main body comprises an outer ring, an inner ring, and a covering portion which are annular tube-shaped respectively. The outer ring is arranged at an outer side of the inner ring along a radial direction to connect with the inner ring. The covering portion covers the outer ring and the inner ring and connects with outer surfaces of the outer ring and the inner ring.

The outer ring is formed by a plurality of first composite material fiber layers stacked together. The inner ring is formed by a plurality of second composite material fiber layers stacked together. The first composite material fiber layers include at least one first winding layer formed by composite material fibers winding along a circumferential direction. The second composite material layers include at least one second braiding layer formed by composite material fibers braiding along the circumferential direction so that the composite material fibers of the at least one second braiding layer extend along a direction traversing the circumferential direction. The covering portion is formed by composite material fibers winding on the outer ring and the inner ring along the circumferential direction.

To achieve the above and other objects, a method to manufacture composite wheel rim of the present invention includes the following steps.

Prepare first semi-product and second semi-product: Prepare a first core and a second core. Each of the first core and the second core is ring-shaped. The first core has an internal diameter larger than an external diameter of the second core. The first semi-product is formed by stacking a plurality of first composite material layers on an outer surface of the first core. The second semi-product is formed by stacking a plurality of second composite material layers on an outer surface of the second core. The first composite material layers include at least one first winding layer which is formed by composite material fibers winding along a circumferential direction of the first core. The second composite material layers include at least one second braiding layer which is formed by composite material fibers braiding along a circumferential direction of the second core so that the composite material fibers of the at least one second braiding layer extend along directions traversing the circumferential direction of the second core.

Wind covering layer: Arrange the first semi-product at an outer side of the second semi-product along a radial direction. Form a covering layer by composite material fibers winding on outer surfaces of the first semi-product and the second semi-product along a circumferential direction.

Shaping: Place the first semi-product and the second semi-product covered by the covering layer into a mold. Heat the mold to form a composite wheel rim.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a profile showing a composite wheel rim of the present invention;
Fig. 1A is a partial enlargement of Fig. 1;
Fig. 2 and Fig. 3 are illustrations showing step of preparing first semi-product of the present invention;
Fig. 4 and Fig. 5 are illustrations showing step of preparing second semi-product of the present invention;
Fig. 6 is a profile showing a composite wheel rim of the present invention before shaping;
Fig. 7 and Fig. 8 are illustrations showing step of shaping of the present invention.

### DETAILED DESCRIPTION OF THE PREFERRED EMBODIMENTS

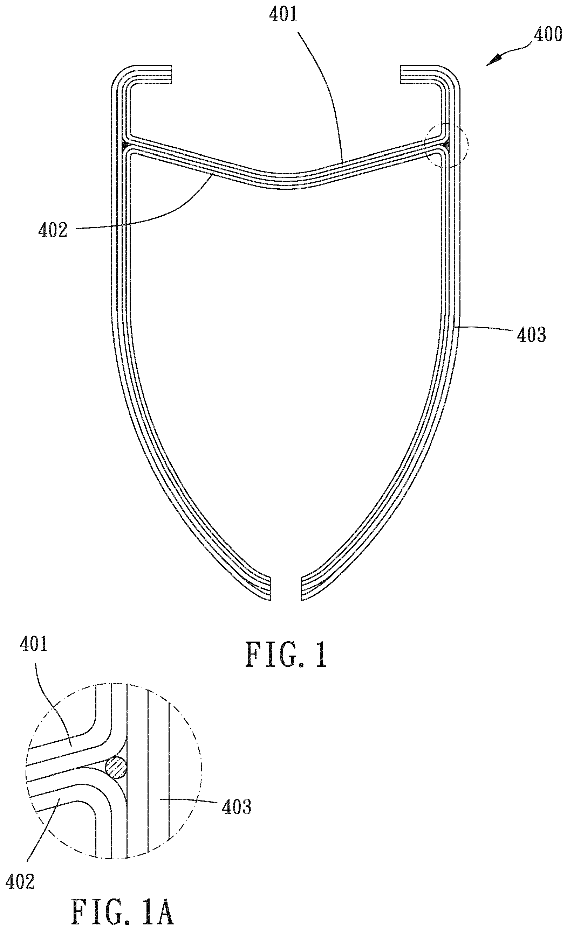

Please refer to Fig. 1 and Fig. 1A, the composite wheel rim 400 of the present invention includes a main body. The main body comprises an outer ring 401, an inner ring 402, and a covering portion 403 which are annular tube-shaped respectively. The outer ring 401 is arranged at an outer side of the inner ring 402 along a radial direction to connect with the inner ring 401. The covering portion 403 covers the outer ring 401 and the inner ring 402 and connects with outer surfaces of the outer ring 401 and the inner ring 402.

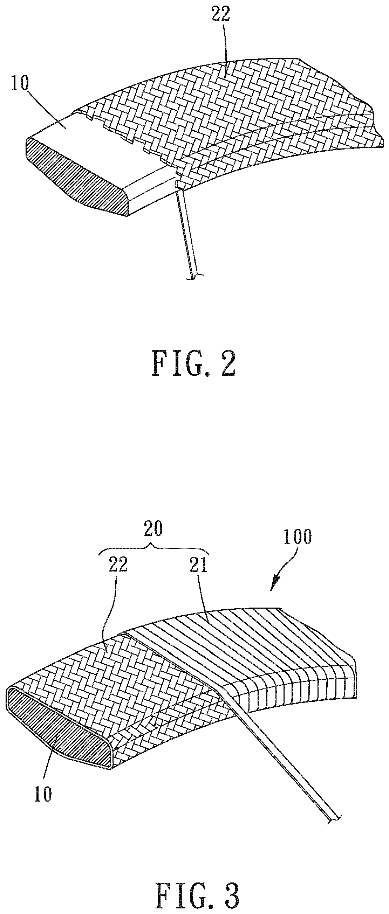

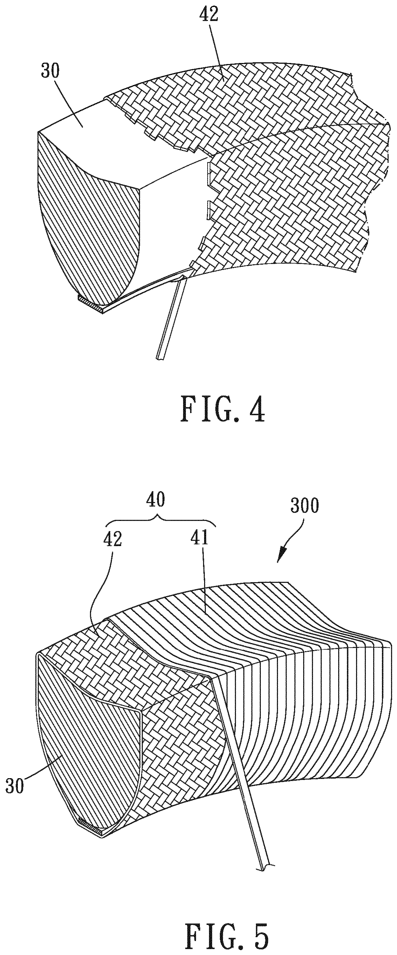

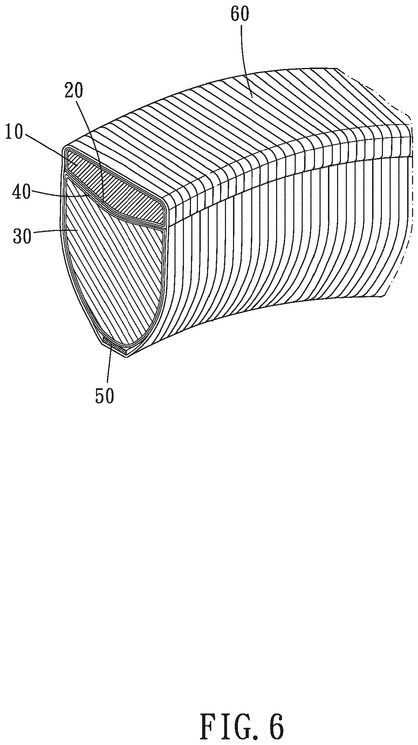

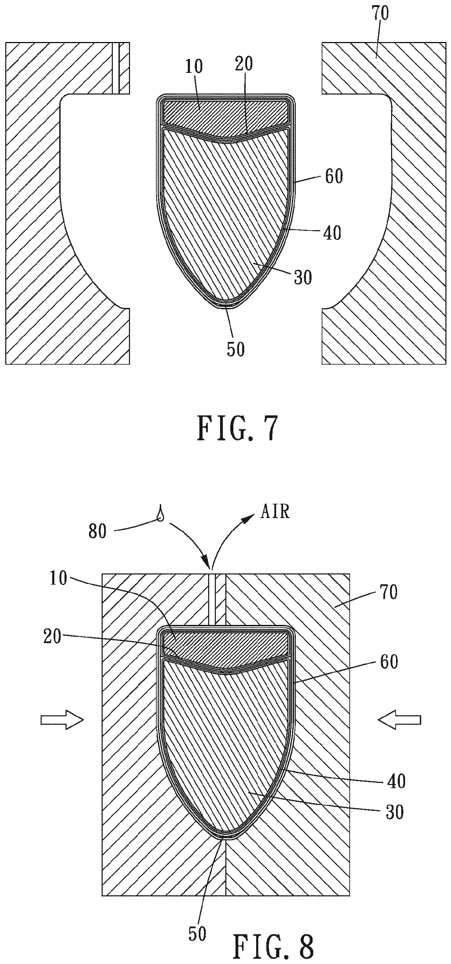

The outer ring 401 is formed by a plurality of first composite material fiber layers 20 stacked together. The inner ring 402 is formed by a plurality of second composite material fiber layers 40 stacked together. The first composite material fiber layers 20 include at least one first winding layer 21 formed by composite material fibers winding along a circumferential direction. The second composite material layers 40 include at least one second braiding layer 42 formed by composite material fibers braiding along the circumferential direction so that the composite material fibers of the at least one second braiding layer 42 extend along a direction traversing the circumferential direction. The covering portion 403 is formed by composite material fibers winding on the outer ring 401 and the inner ring 402 along the circumferential direction. (Structures of the first winding layer, the first braiding layer, the second winding layer, and the second braiding layer are further shown in Fig. 2 to Fig. 8.)

Please refer to Fig. 1 to Fig. 8, the method to manufacture composite wheel rim 400 of the present invention includes the following steps.

Prepare first semi-product 100 and second semi-product 300: Prepare a first core 10 and a second core 30. Each of the first core 10 and the second core 30 is ring-shaped. The first core 10 has an internal diameter larger than an external diameter of the second core 30. The first semi-product 100 is formed by stacking a plurality of first composite material layers 20 on an outer surface of the first core 10. The second semi-product 300 is formed by stacking a plurality of second composite material layers 40 on an outer surface of the second core 30. The first composite material layers 20 include at least one first winding layer 21 and at least one first braiding layer 22. The at least one first winding layer 21 is formed by composite material fibers (such as carbon fibers) winding along a circumferential direction of the first core 10. The at least one first braiding layer 22 is formed by composite material fibers braiding along the circumferential direction of the first core 10 so that the composite material fibers of the at least one first braiding layer 22 extend along directions traversing the circumferential direction of the first core 10. The second composite material layers 40 include at least one second winding layer 41 and at least one second braiding layer 42. The at least one second winding layer 41 is formed by composite material fibers winding along the circumferential direction of the second core 30. The at least one second braiding layer 42 is formed by composite material fibers braiding along a circumferential direction of the second core 30 so that the composite material fibers of the at least one second braiding layer 42 extend along directions traversing the circumferential direction of the second core 30. In the present embodiment, the first composite material layers 20 include a plurality of the first winding layers 21 and a plurality of the first braiding layers 22. The second composite material layers 40 include a plurality of the second winding layers 41 and a plurality of second braiding layers 42. Preferably, the first winding layers 21 and the first braiding layers 22 are arranged alternately. The second winding layers 41 and the second braiding layers 42 are arranged alternately.

Wind covering layer 60: Arrange the first semi-product 100 at an outer side of the second semi-product 300 along a radial direction. Form a covering layer 60 by composite material fibers winding on outer surfaces of the first semi-product 100 and the second semi-product 300 along a circumferential direction. Preferably, a ring-shaped reinforcement element 50 is arranged at an inner side of the second semi-product 300 along the radial direction before winding the composite material fibers to form the covering layer 60.

Shaping: Place the first semi-product 100 and the second semi-product 300 covered by the covering layer 60 into a mold 70. Heat the mold 70 to form a composite wheel rim 400. In the present embodiment, after placing the first semi-product 100 and the second semi-product 300 covered by the covering layer 60 into the mold 70, air in the mold 70 is discharged to make an interior of the mold 70 become negative pressure, and an adhesive 80 (such as resin) is injected into the mold 70 to fill up gaps among the composite material fibers before heating the mold 70 to form the composite wheel rim 400. However, in other possible embodiments, the first composite material layers and the second composite material layers can be prepregs.

In the present embodiment, the first core 10 and the second core 30 are made of soluble material. After the step of "shaping", the composite wheel rim 400 is formed with holes, and the first core 10 and the second core 30 are dissolved and removed by organic solvents. However, in other embodiments, the first core and the second core can be removed by other means or not removed when made of foamed material.

About braiding, the composite material fibers of at least one of the at least one first braiding layer 22 and the at least second braiding layer 42 are classified into a plurality of first fibers and a plurality of second fibers according angles between the composite material fibers and the circumferential direction so that the first fibers and the second fibers extend toward different sides of the circumferential direction. Preferably, angle between the circumferential direction and each of the first fibers and the second fibers is 45 degrees. Practically, a braiding machine is used to braid directly on the first core and the second core when the first core and the second core are rotated.

About winding, wind the composite material fibers continuously along the circumferential direction, and adjacent loops of composite material fibers are overlapped partially. The angle of winding can be perpendicular to the circumferential direction or traversing the circumferential direction. Different composite material layers can have various winding directions and angles.

Besides, the first core 10 is preferably formed with a rib on an inner face thereof. The second core 30 is formed with a groove on an outer face thereof. The rib has a corresponding shape with the groove so that an inner face of the first semi-product 100 is able to embed into an outer face of the second semi-product 300. Thus, the engagement of the first semi-product 100 and the second semi-product 300 can be accurate.

## Claims

1. A composite wheel rim (400), including a main body, the main body comprising an outer ring (401), an inner ring (402), and a covering portion (403) which are annular tube-shaped respectively, the outer ring (401) being arranged at an outer side of the inner ring (402) along a radial direction to connect with the inner ring (402), the covering portion (403) covering the outer ring (401) and the inner ring (402) and connecting with outer surfaces of the outer ring (401) and the inner ring (402);
wherein the outer ring (401) is formed by a plurality of first composite material fiber layers (20) stacked together, said first composite material fiber layers (20) including at least one first winding layer (21) formed by composite material fibers winding along a circumferential direction;
wherein the inner ring (402) is formed by a plurality of second composite material fiber layers (40) stacked together, said second composite material layers (40) including at least one second braiding layer (42) formed by composite material fibers braiding along the circumferential direction so that the composite material fibers of the at least one second braiding layer (42) extend along a direction traversing the circumferential direction;
**characterized in that**
the covering portion (403) is formed by composite material fibers winding on the outer ring (401) and the inner ring (402) along the circumferential direction.

2. The composite wheel rim of claim 1, wherein the first composite material layers (20) further include at least one first braiding layer (22) formed by composite material fibers braiding along the circumferential direction so that the composite material fibers of the at least one first braiding layer (22) extend along a direction traversing the circumferential direction, the second composite material layer (40) further include at least one second winding layer (41) formed by composite material fibers winding along a circumferential direction.

3. The composite wheel rim of claim 2, wherein the first composite material layers (20) includes a plurality of the first winding layers (21) and a plurality of first braiding layers (22), the second composite material layers (40) includes a plurality of the second winding layers (41) and a plurality of second braiding layers (42).

4. The composite wheel rim of claim 1, wherein the composite material fibers are carbon fibers.

5. A method to manufacture a composite wheel rim, including the steps of:
by preparing first semi-product (100) and second semi-product (200) preparing a first core (10) and a second core (30), each of the first core (10) and the second core (30) being ring-shaped, the first core (10) having an internal diameter larger than an external diameter of the second core (30), the first semi-product (100) being formed by stacking a plurality of first composite material layers (20) on an outer surface of the first core (10), the second semi-product (300) being formed by stacking a plurality of second composite material layers (40) on an outer surface of the second core (30);
wherein the first composite material layers (20) include at least one first winding layer (21) which is formed by composite material fibers winding along a circumferential direction of the first core (10), the second composite material layers (40) include at least one second braiding layer (42) which is formed by composite material fibers braiding along a circumferential direction of the second core (30) so that the composite material fibers of the at least one second braiding layer (42) extend along directions traversing the circumferential direction of the second core (30);
forming a covering layer (60) by arranging the first semi-product (100) at an outer side of the second semi-product (300) along a radial direction, forming a covering layer by composite material fibers on outer surfaces of the first semi-product (100) and the second semi-product (300);
shaping by placing the first semi-product (100) and the second semi-product (300) covered by the covering layer (60) into a mold (70), heating the mold (70) to form a composite wheel rim (400);
**characterized in that** said covering layer is formed by winding the composite material fibers on the outer surfaces of the first semi-product (100) and the second semi-product (300) along a circumferential direction.

6. The method to manufacture composite wheel rim of claim 5, wherein the first composite material layers (20) further include at least one first braiding layer (22) which is formed by composite material fibers braiding along the circumferential direction of the first core (10) so that the composite material fibers of the at least one first braiding layer (22) extend along directions traversing the circumferential direction of the first core (10), the second composite material layers (40) further including at least one second winding layer (41) which is formed by composite material fibers winding along the circumferential direction of the second core (30).

7. The method to manufacture composite wheel rim of claim 6, wherein the composite material fibers of at least one of the at least one first braiding layer (22) and the at least second braiding layer (42) are classified into a plurality of first fibers and a plurality of second fibers according angles between the composite material fibers and the circumferential direction so that the first fibers and the second fibers extend toward different sides of the circumferential direction.

8. The method to manufacture composite wheel rim of claim 6, wherein the first composite material layers (20) include a plurality of the first winding layers (21) and a plurality of the first braiding layers (22), the second composite material layers (40) include a plurality of the second winding layers (41) and a plurality of second braiding layers (42).

9. The method to manufacture composite wheel rim of claim 8, wherein the first winding layers (21) and the first braiding layers (22) are arranged alternately, the second winding layers (41) and the second braiding layers (42) are arranged alternately.

10. The method to manufacture composite wheel rim of claim 9, wherein each of the first core (10) and the second core (30) is foamed material; wherein, in the step of forming the covering layer, a ring-shaped reinforcement element (50) is arranged at an inner side of the second semi-product (300) along the radial direction before winding the composite material fibers to form the covering layer (60); wherein, in the step of shaping, after placing the first semi-product (100) and the second semi-product (300) covered by the covering layer (60) into the mold (70), air in the mold (70) is discharged to make an interior of the mold (70) become negative pressure, an adhesive (80) is injected into the mold (70) to fill up gaps among the composite material fibers before heating the mold (70) to form the composite wheel rim (400); the composite material fibers of one of the at least one first braiding layer (22) and the at least second braiding layer (42) are classified into a plurality of first fibers and a plurality of second fibers according angles between the composite material fibers and the circumferential direction, the first fibers and the second fibers extend toward different sides of the circumferential direction, angle between the circumferential direction and each of the first fibers and the second fibers is 45 degrees; the composite material fibers are carbon fibers; the adhesive (80) is resin; the first core (10) is formed with a rib on an inner face thereof, the second core (30) is formed with a groove on an outer face thereof, the rib has a corresponding shape with the groove so that an inner face of the first semi-product (100) is able to embed into an outer face of the second semi-product (300).

## Patentansprüche

1. Radfelge aus Verbundwerkstoff (400) mit einem Hauptkörper, wobei der Hauptkörper einen Außenring (401), einen Innenring (402) und einen Abdeckabschnitt (403) aufweist, die jeweils wie ein ringförmiges Rohr geformt sind, wobei der Außenring (401) an einer Außenseite des Innenrings (402) entlang einer radialen Richtung angeordnet ist, um mit dem Innenring (402) verbunden zu werden, wobei der Abdeckabschnitt (403) den Außenring (401) und den Innenring (402) abdeckt und mit Außenflächen des Außenrings (401) und des Innenrings (402) verbunden ist,
wobei der Außenring (401) durch eine Vielzahl von ersten Verbundmaterial-Faserschichten (20) gebildet ist, die übereinander gestapelt sind, wobei die ersten Verbundmaterial-Faserschichten (20) mindestens eine erste Wickelschicht (21) umfassen, die durch Verbundmaterial-Fasern gebildet ist, die entlang einer Umfangsrichtung gewickelt sind,
wobei der Innenring (402) durch eine Vielzahl von zweiten Verbundmaterialfaserschichten (40) gebildet wird, die übereinander gestapelt sind, wobei die zweiten Verbundmaterialschichten (40) mindestens eine zweite Flechtschicht (42) enthalten, die durch Verbundmaterialfasern gebildet ist, die entlang der Umfangsrichtung geflochten sind, so dass sich die Verbundmaterialfasern der mindestens einen zweiten Flechtschicht (42) entlang einer Richtung erstrecken, die die Umfangsrichtung quert,
**dadurch gekennzeichnet, dass**
der Abdeckabschnitt (403) durch Verbundmaterialfasern gebildet wird, die sich entlang der Umfangsrichtung um den Außenring (401) und den Innenring (402) winden.

2. Radfelge aus Verbundwerkstoff nach Anspruch 1, wobei die ersten Verbundwerkstoffschichten (20) ferner mindestens eine erste Flechtschicht (22) umfassen, die durch Verbundwerkstofffasern gebildet ist, die entlang der Umfangsrichtung geflochten sind, so dass sich die Verbundwerkstofffasern der mindestens einen ersten Flechtschicht (22) entlang einer Richtung erstrecken, die die Umfangsrichtung quert, wobei die zweite Verbundwerkstoffschicht (40) ferner mindestens eine zweite Wickelschicht (41) umfasst, die durch Verbundwerkstofffasern gebildet ist, die entlang einer Umfangsrichtung gewickelt sind.

3. Radfelge aus Verbundwerkstoff nach Anspruch 2, wobei die ersten Verbundwerkstoffschichten (20) eine Vielzahl von ersten Wickelschichten (21) und eine Vielzahl von ersten Flechtschichten (22) enthalten und die zweiten Verbundwerkstoffschichten (40) eine Vielzahl der zweiten Wickelschichten (41) und eine Vielzahl von zweiten Flechtschichten (42) enthalten.

4. Radfelge aus Verbundwerkstoff nach Anspruch 1, wobei die Fasern des Verbundwerkstoffs Kohlenstofffasern sind.

5. Verfahren zur Herstellung einer Radfelge aus Verbundwerkstoff, das die folgenden Schritte umfasst:
Herstellen eines ersten Halbzeugs (100) und eines zweiten Halbzeugs (200) durch Herstellen eines ersten Kerns (10) und eines zweiten Kerns (30), wobei sowohl der erste Kern (10) als auch der zweite Kern (30) ringförmig sind und der erste Kern (10) einen größeren Innendurchmesser als der Außendurchmesser des zweiten Kerns (30) aufweist, wobei das erste Halbzeug (100) durch Stapeln einer Vielzahl von ersten Verbundmaterialschichten (20) auf einer Außenfläche des ersten Kerns (10) gebildet wird, wobei das zweite Halbzeug (300) durch Stapeln einer Vielzahl von zweiten Verbundmaterialschichten (40) auf einer Außenfläche des zweiten Kerns (30) gebildet wird; wobei die ersten Verbundmaterialschichten (20) mindestens eine erste Wickelschicht (21) enthalten, die durch Verbundmaterialfasern gebildet wird, die sich entlang einer Umfangsrichtung des ersten Kerns (10) wickeln, wobei die zweiten Verbundmaterialschichten (40) mindestens eine zweite Flechtschicht (42) enthalten, die durch Verbundmaterialfasern gebildet wird, die entlang einer Umfangsrichtung des zweiten Kerns (30) geflochten sind, so dass sich die Verbundmaterialfasern der mindestens einen zweiten Flechtschicht (42) entlang Richtungen erstrecken, die die Umfangsrichtung des zweiten Kerns (30) durchqueren;
Ausbilden einer Deckschicht (60) durch Anordnen des ersten Halbzeugs (100) an einer Außenseite des zweiten Halbzeugs (300) entlang einer radialen Richtung, Ausbilden einer Deckschicht durch Verbundmaterialfasern auf Außenflächen des ersten Halbzeugs (100) und des zweiten Halbzeugs (300);
Formgebung durch Einlegen des ersten Halbzeugs (100) und des zweiten Halbzeugs (300), die von der Deckschicht (60) bedeckt sind, in eine Form (70), Erhitzen der Form (70), um eine Verbundfelge (400) zu bilden,
**dadurch gekennzeichnet, dass**
die Deckschicht durch Aufwickeln der Verbundmaterialfasern auf die Außenflächen des ersten Halbzeugs (100) und des zweiten Halbzeugs (300) entlang einer Umfangsrichtung gebildet wird.

6. Verfahren zur Herstellung einer Radfelge aus Verbundwerkstoff nach Anspruch 5, wobei die ersten Verbundwerkstoffschichten (20) ferner mindestens eine erste Flechtschicht (22) umfassen, die durch Verbundwerkstofffasern gebildet wird, die entlang der Umfangsrichtung des ersten Kerns (10) geflochten sind, so dass sich die Verbundwerkstofffasern der mindestens einen ersten Flechtschicht (22) entlang von Richtungen erstrecken, die die Umfangsrichtung des ersten Kerns (10) queren, wobei die zweiten Verbundmaterialschichten (40) ferner mindestens eine zweite Wickelschicht (41) umfassen, die durch Verbundmaterialfasern gebildet wird, die sich entlang der Umfangsrichtung des zweiten Kerns (30) winden.

7. Verfahren zur Herstellung einer Radfelge aus Verbundwerkstoff nach Anspruch 6, wobei die Verbundwerkstofffasern mindestens einer der mindestens einen ersten Flechtschicht (22) und der mindestens zweiten Flechtschicht (42) in eine Vielzahl von ersten Fasern und eine Vielzahl von zweiten Fasern entsprechend den Winkeln zwischen den Verbundwerkstofffasern und der Umfangsrichtung unterteilt sind, so dass sich die ersten Fasern und die zweiten Fasern zu verschiedenen Seiten der Umfangsrichtung erstrecken.

8. Verfahren zur Herstellung einer Radfelge aus Verbundwerkstoff nach Anspruch 6, wobei die ersten Verbundwerkstoffschichten (20) eine Vielzahl der ersten Wickellagen (21) und eine Vielzahl der ersten Flechtlagen (22) umfassen, die zweiten Verbundwerkstoffschichten (40) eine Vielzahl der zweiten Wickellagen (41) und eine Vielzahl der zweiten Flechtlagen (42) umfassen.

9. Verfahren zur Herstellung einer Radfelge aus Verbundwerkstoff nach Anspruch 8, wobei die ersten Wickellagen (21) und die ersten Flechtlagen (22) abwechselnd angeordnet sind, und wobei die zweiten Wickellagen (41) und die zweiten Flechtlagen (42) abwechselnd angeordnet sind.

10. Verfahren zur Herstellung einer Radfelge aus Verbundwerkstoff nach Anspruch 9, wobei sowohl der erste Kern (10) als auch der zweite Kern (30) aus geschäumtem Material besteht, wobei in dem Schritt des Ausbildens der Deckschicht ein ringförmiges Verstärkungselement (50) an einer Innenseite des zweiten Halbzeugs (300) entlang der radialen Richtung angeordnet wird, bevor die Verbundwerkstofffasern zur Bildung der Deckschicht (60) gewickelt werden, wobei in dem Schritt des Formens, nachdem das erste Halbzeug (100) und das zweite Halbzeug (300), das von der Deckschicht (60) bedeckt ist, in die Form (70) eingelegt worden sind, Luft in der Form (70) abgelassen wird, um einen Unterdruck im Inneren der Form (70) zu erzeugen, ein Klebstoff (80) in die Form (70) eingespritzt wird, um Lücken zwischen den Verbundwerkstofffasern aufzufüllen, bevor die Form (70) erhitzt wird, um die Verbundwerkstofffelge (400) zu bilden; die Verbundmaterialfasern von einer der mindestens einen ersten Flechtschicht (22) und der mindestens zweiten Flechtschicht (42) in eine Vielzahl von ersten Fasern und eine Vielzahl von zweiten Fasern entsprechend den Winkeln zwischen den Verbundmaterialfasern und der Umfangsrichtung klassifiziert sind, wobei sich die ersten Fasern und die zweiten Fasern zu verschiedenen Seiten der Umfangsrichtung erstrecken und der Winkel zwischen der Umfangsrichtung und jeder der ersten Fasern und der zweiten Fasern 45 Grad beträgt; die Verbundmaterialfasern Kohlenstofffasern sind; der Klebstoff (80) Harz ist; der erste Kern (10) mit einer Rippe auf einer Innenfläche davon ausgebildet ist, der zweite Kern (30) mit einer Nut auf einer Außenfläche davon ausgebildet ist, die Rippe eine entsprechende Form mit der Nut hat, so dass eine Innenfläche des ersten Halbzeugs (100) in der Lage ist, in eine Außenfläche des zweiten Halbzeugs (300) einzubetten.

## Revendications

1. Jante composite (400), incluant un corps principal, le corps principal comprenant un cercle externe (401), un cercle interne (402), et une portion de recouvrement (403) qui sont en forme de tube annulaire respectivement, le cercle externe (401) étant agencé au niveau d'un côté externe du cercle interne (402) le long d'une direction radiale pour se lier au cercle interne (402), la portion de recouvrement (403) recouvrant le cercle externe (401) et le cercle interne (402) et étant liée à des surfaces externes du cercle externe (401) et du cercle interne (402) ;
dans laquelle le cercle externe (401) est formé d'une pluralité de premières couches de fibres de matériau composite (20) empilées les unes sur les autres, lesdites premières couches de fibres de matériau composite (20) incluant au moins une première couche d'enroulement (21) formée de fibres de matériau composite venant s'enrouler le long d'une direction circonférentielle ;
dans laquelle le cercle interne (402) est formé d'une pluralité de secondes couches de fibres de matériau composite (40) empilées les unes sur les autres, lesdites secondes couches de matériau composite (40) incluant au moins une seconde couche de tressage (42) formée de fibres de matériau composite tressées le long de la direction circonférentielle de sorte que les fibres de matériau composite de la au moins une seconde couche de tressage (42) s'étendent le long d'une direction croisant la direction circonférentielle ;
**caractérisée en ce que**
la portion de recouvrement (403) est formée de fibres de matériau composite venant s'enrouler sur le cercle externe (401) et le cercle interne (402) le long de la direction circonférentielle.

2. Jante composite selon la revendication 1, dans laquelle les premières couches de matériau composite (20) incluent en outre au moins une première couche de tressage (22) formée de fibres de matériau composite tressées le long de la direction circonférentielle de sorte que les fibres de matériau composite de la au moins une première couche de tressage (22) s'étendent le long d'une direction croisant la direction circonférentielle, les secondes couches de matériau composite (40) incluent en outre au moins une seconde couche d'enroulement (41) formée de fibres de matériau composite venant s'enrouler le long d'une direction circonférentielle.

3. Jante composite selon la revendication 2, dans laquelle les premières couches de matériau composite (20) incluent une pluralité des premières couches d'enroulement (21) et une pluralité de premières couches de tressage (22), les secondes couches de matériau composite (40) incluent une pluralité des secondes couches d'enroulement (41) et une pluralité de secondes couches de tressage (42).

4. Jante composite selon la revendication 1, dans laquelle les fibres de matériau composite sont des fibres de carbone.

5. Procédé de fabrication d'une jante composite, incluant les étapes de :
préparation d'un premier demi-produit (100) et d'un second demi-produit (200) par préparation d'un premier noyau (10) et d'un second noyau (30), chacun du premier noyau (10) et du second noyau (30) étant de forme annulaire, le premier noyau (10) présentant un diamètre interne plus grand qu'un diamètre externe du second noyau (30), le premier demi-produit (100) étant formé par empilement d'une pluralité de premières couches de matériau composite (20) sur une surface externe du premier noyau (10), le second demi-produit (300) étant formé par empilement d'une pluralité de secondes couches de matériau composite (40) sur une surface externe du second noyau (30) ;
dans lequel les premières couches de matériau composite (20) incluent au moins une première couche d'enroulement (21) qui est formée de fibres de matériau composite venant s'enrouler le long d'une direction circonférentielle du premier noyau (10), les secondes couches de matériau composite (40) incluent au moins une seconde couche de tressage (42) qui est formée de fibres de matériau composite tressées le long d'une direction circonférentielle du second noyau (30) de sorte que les fibres de matériau composite de la au moins une seconde couche de tressage (42) s'étendent le long de directions croisant la direction circonférentielle du second noyau (30) ;
formation d'une couche de recouvrement (60) par agencement du premier demi-produit (100) au niveau d'un côté externe du second demi-produit (300) le long d'une direction radiale, formation d'une couche de recouvrement par des fibres de matériau composite sur des surfaces externes du premier demi-produit (100) et du second demi-produit (300) ;
mise en forme par placement du premier demi-produit (100) et du second demi-produit (300) recouverts de la couche de recouvrement (60) dans un moule (70), chauffage du moule (70) pour former une jante composite (400) ;
**caractérisé en ce que** ladite couche de recouvrement est formée par enroulement des fibres de matériau composite sur les surfaces externes du premier demi-produit (100) et du second demi-produit (300) le long d'une direction circonférentielle.

6. Procédé de fabrication d'une jante composite selon la revendication 5, dans lequel les premières couches de matériau composite (20) incluent en outre au moins une première couche de tressage (22) qui est formée de fibres de matériau composite tressées le long de la direction circonférentielle du premier noyau (10) de sorte que les fibres de matériau composite de la au moins une première couche de tressage (22) s'étendent le long de directions croisant la direction circonférentielle du premier noyau (10), les secondes couches de matériau composite (40) incluant en outre au moins une seconde couche d'enroulement (41) qui est formée de fibres de matériau composite venant s'enrouler le long de la direction circonférentielle du second noyau (30).

7. Procédé de fabrication d'une jante composite selon la revendication 6, dans lequel les fibres de matériau composite d'au moins l'une parmi la au moins une première couche de tressage (22) et la au moins une seconde couche de tressage (42) sont classées en une pluralité de premières fibres et en une pluralité de secondes fibres en fonction d'angles entre les fibres de matériau composite et la direction circonférentielle de sorte que les premières fibres et les secondes fibres s'étendent vers des côtés différents de la direction circonférentielle.

8. Procédé de fabrication d'une jante composite selon la revendication 6, dans lequel les premières couches de matériau composite (20) incluent une pluralité des premières couches d'enroulement (21) et une pluralité des premières couches de tressage (22), les secondes couches de matériau composite (40) incluent une pluralité des secondes couches d'enroulement (41) et une pluralité de secondes couches de tressage (42).

9. Procédé de fabrication d'une jante composite selon la revendication 8, dans lequel les premières couches d'enroulement (21) et les premières couches de tressage (22) sont agencées en alternance, les secondes couches d'enroulement (41) et les secondes couches de tressage (42) sont agencées en alternance.

10. Procédé de fabrication d'une jante composite selon la revendication 9, dans lequel chacun du premier noyau (10) et du second noyau (30) est un matériau expansé ; dans lequel, dans l'étape de formation de la couche de recouvrement, un élément de renforcement annulaire (50) est agencé au niveau d'un côté interne du second demi-produit (300) le long de la direction radiale avant l'enroulement des fibres de matériau composite pour former la couche de recouvrement (60) ; dans lequel, dans l'étape de mise en forme, après le placement du premier demi-produit (100) et du second demi-produit (300) recouverts de la couche de recouvrement (60) dans le moule (70), de l'air dans le moule (70) est évacué pour mettre un intérieur du moule (70) en pression négative, un adhésif (80) est injecté dans le moule (70) pour remplir des interstices entre les fibres de matériau composite avant le chauffage du moule (70) pour former la jante composite (400) ; les fibres de matériau composite de l'une parmi la au moins une première couche de tressage (22) et la au moins une seconde couche de tressage (42) sont classées en une pluralité de premières fibres et en une pluralité de secondes fibres en fonction d'angles entre les fibres de matériau composite et la direction circonférentielle, les premières fibres et les secondes fibres s'étendent vers des côtés différents de la direction circonférentielle, un angle entre la direction circonférentielle et chacune des premières fibres et des secondes fibres est de 45 degrés ; les fibres de matériau composite sont des fibres de carbone ; l'adhésif (80) est de la résine ; le premier noyau (10) est pourvu d'une nervure sur une face interne de celui-ci, le second noyau (30) est pourvu d'une rainure sur une face externe de celui-ci, la nervure présente une forme correspondante par rapport à la rainure de sorte qu'une face interne du premier demi-produit (100) soit apte à s'encastrer dans une face externe du second demi-produit (300).
